# EUROPEAN PATENT SPECIFICATION

(11) **EP 1 939 013 B1**
(45) Date of publication and mention of the grant of the patent: **02.06.2010**
(21) Application number: 07024205.2
(22) Date of filing: 13.12.2007
(51) Int. Cl.: B60B 27/02, B60B 1/04

(54) **Hub for a spoked bicycle wheel and related spoked wheel**
Nabe für ein Fahrradspeichenrad und entsprechendes Speichenrad
Jante de roue à rayons de bicyclette et roue à rayons correspondante

(30) Priority: 29.12.2006 IT MI20062535
(43) Date of publication of application: 02.07.2008
(73) Proprietor: CAMPAGNOLO S.r.l., 36100 Vicenza (VI) (IT)
(72) Inventor: Meggiolan, Mario, 36051 Creazzo -VI (IT)
(74) Representative: Riccardi, Elisa

(56) References cited:
- EP-A- 1 724 122
- EP-A- 1 726 457
- DE-U1- 20 216 826
- FR-A1- 2 324 471
- FR-A1- 2 882 689

## Description

The present invention concerns a hub for a spoked bicycle wheel. The invention also concerns a spoked bicycle wheel comprising such a hub.

As known, a bicycle wheel is mainly made up of a hub intended to be rotatably associated with the bicycle frame, a rim on which the tyre is assembled, and a plurality of spokes extending and tensioned between respective seats of the hub and of the rim.

The stiffness of the wheel is particularly important, especially in the field of high-performance bicycle wheels. Indeed, a stiff wheel has many advantages, including the fact that it is more stable and easy to handle when taking bends and in more dynamic situations, and more reactive when accelerating and braking, thus improving the transmission efficiency. The spokes are by their nature flexible, and thus do not per se ensure good stiffness of the wheel.

In order to improve the stiffness of the wheel, new geometries of arrangement of the spokes, or types of spokings, are continuously researched. For example, it is known to cross over the spokes on the side where the wheel is connected to a sprocket assembly or to a disc brake, since the torsion is greater on that side.

In order to allow these geometries of arrangement of the spokes, which require an attachment of the spokes to the hub in a substantially tangential direction, various hubs have been devised, typically comprising elements projecting radially from the hub, in which the seats for housing the spokes are formed.

Hubs wherein the seats for housing the spokes consist of through holes are known, for example from US 478,394. Such seats effectively hold the spoke transversally to its length, but assembling the wheel is not easy since the spoke must be inserted, an end without a head first, into the respective housing hole, and then unthreaded along its entire length until the head of the spoke, made at the opposite end, is brought into abutment against the hub, to allow the tensioning of the spoke.

In order to make it easier to assemble the wheel, hubs with open seats are also known, such as from EP 1 726 457 A2, and from FR 2 882 689, which allow the direct insertion of the end region of the spoke in a direction transversal to the longitudinal direction of the seat, i.e. without unthreading it along its entire length. It should be noted that, in the case of spokes that do not have a curved head, the longitudinal direction of the seat coincides with the longitudinal and tensioning direction of the spoke. Such open seats, however, do not hold the spoke sufficiently in the directions perpendicular to the longitudinal direction of the seat, for which reason the wheel does not obtain a suitable stiffness.

The technical problem at the basis of the invention is to provide a wheel that is easy to assemble and of suitable stiffness, with whatever geometry of arrangement of the spokes.

In a first aspect thereof, the invention concerns a hub for a spoked bicycle wheel, comprising at least one seat for inserting and housing an end portion of a spoke, said at least one seat comprising a notch shaped for the insertion of a spoke in a different direction from a longitudinal direction of the seat, and surfaces for stopping the spoke both in both ways of a direction of a rotation axis of the hub, and in both ways of a second direction perpendicular both to the axial direction and to the longitudinal direction of the seat.

In the present description and in the attached claims, the expression "longitudinal direction" should be construed as the direction along which the spoke passes through the seat in the assembled configuration, and does not imply any dimensional relationship with a transversal direction of the seat.

The hub according to the invention, thanks to the configuration of the notch, allows the spoke to be easily connected thereto without having to unthread it along its entire length, as it occurs in the case of spokes inserted head-first in seats only having a through hole. The hub according to the invention, thanks to the stop surfaces of the seat, also allows the wheel to be provided with increased stiffness.

More specifically, since the seat has surfaces for stopping the spoke in the two directions perpendicular to each other and to the longitudinal direction of the seat, which in the case of spokes not having a curved head coincides with the tensioning direction, the wheel is stiffened both when the rim and the hub are offset for the absorption of unevenness of the ground or of a bump, or more simply to take a bend, and the spokes are subject to a stress substantially in the axial direction, and when, during braking and accelerating, the rim has a relative rotation with respect to the hub and the spokes are subject to a stress substantially in a direction tangential to the hub.

Preferably, the notch is shaped for the insertion of a spoke in a direction perpendicular to the longitudinal direction of the seat.

Advantageously, a middle plane of the notch is sloped with respect to the axial direction and to the second direction. In this case, the side walls of the notch provide said stop surfaces when the spoke is housed on the bottom of the notch. The notch can therefore by itself make up the insertion and housing seat, with manifest advantages in terms of ease of manufacture.

It should be noted that thanks to the aforementioned slope of the notch, the spoke is effectively held against coming out from the notch, both in case the spoke extends in a substantially radial direction, and in case the spoke extends in a substantially tangential direction, when stressed in the axial direction and in the tangential direction in use of the wheel.

More specifically, the middle plane of the notch is sloped by an acute angle with respect to a transversal plane of the hub.

Preferably, said acute angle is between 10° and 80°, more preferably between 30° and 60°, and even more preferably between 40° and 50°.

Advantageously, the slope can be selected according to the direction along which greater stiffness of the spoke and thus of the wheel is preferred. If greater stiffness is desired in the axial direction, slope values close to the lower extreme of the range will be preferred, vice-versa if greater stiffness is desired in the second direction, values close to the upper extreme of the range will be preferred, while a slope selected among central values of the range shall ensure a roughly equal stiffness in both directions.

Said seat can be blind in the longitudinal direction of the seat, it being wider at the blind end to allow the insertion of a head of the spoke.

Alternatively, said seat, and in particular said notch, can pass through the body of the hub in the longitudinal direction of the seat. In this way, the spoke can be inserted into the seat without particular care, and it can slide therein during assembling to ease assembling also on the rim side of the wheel.

The through seat can further comprise a cavity undercut with respect to the notch. Such an embodiment is suitable for spokes having a thin central portion, of a thickness smaller than or equal to the width of the notch, and an end portion of a thickness substantially equal to the diameter of the cavity. The spoke is inserted by passing the thin portion in the notch, and then sliding it in the longitudinal direction of the seat until the end portion is housed in the cavity, and there it is advantageously prevented from coming out from the notch, thanks to the undercut surfaces. Added to these advantages is the ease of manufacturing the seat, which requires, for example, a single machine tool operation.

Preferably, in the hub according to the invention the seat, and in particular the notch, passes through the body of the hub in a longitudinal direction, and it further comprises an undercut cavity with respect to the notch.

Such an embodiment is particularly suitable for spokes having a thin central portion, of a thickness smaller than or equal to the width of the notch, and an end portion of a thickness substantially equal to the diameter of the cavity, which is inserted as discussed above.

Preferably, the cavity is undercut with respect to the notch along its entire length, so as to avoid concentrations of tensions and limit the risk of breaking when the spoke is in the assembled configuration.

Preferably, the undercut surfaces of the seat at least partially make up said surfaces for stopping in the axial direction and/or in the second direction.

Preferably, the undercut surfaces, which prevent the spoke from coming out from the notch, are curved. Such a provision allows the concentration of the tensions of a curved, most commonly cylindrical spoke portion housed in the undercut cavity, to be further decreased.

Preferably, the seat comprises walls extending parallel to the longitudinal direction of the seat, the longitudinal direction of the seat being sloped with respect to a transversal plane of the hub.

More preferably, said slope coincides with a camber angle of the wheel.

The hub can preferably comprise at least one spoke attachment element radially protruding from the hub near to an axial end thereof, said at least one through- or blind seat being formed in said at least one spoke attachment element.

Preferably, at least two seats are formed in each spoke attachment element.

More preferably, said at least two seats formed in a same spoke attachment element extend according to angles (camber angles) that diverge from one another with respect to a transversal plane of the hub. In this way, in the spoke attachment element a resisting section of variable thickness is created, which provides a suitable strength without making the hub excessively heavier.

In order to keep the weight low, each spoke attachment element can be at least partially tapered in the radial direction, in other words its circumferential extent can decrease from the inside towards the outside of the hub in at least one radial portion of the spoke attachment element.

More specifically, the tapering in the radial direction is obtained by the spoke attachment elements comprising opposite sloped surfaces. At least one of the ends of the cavity of the seat can open at a respective sloped surface, or the sloped surfaces can be radially outside at least one of the ends of the cavity of the seat.

Again in order to keep the weight low, each spoke attachment element can be indented in the axial direction at at least one of its opposite ends in the axial direction.

As an alternative to the provision of radially protruding spoke attachment elements, the hub, at at least one axial end thereof, can comprise an annular surface, the notch of said at least one seat extending from said annular surface. Such an embodiment is particularly advantageous for spokes with radial attachment.

In the various aforementioned embodiments, the longitudinal direction of the seat can be substantially radial or substantially tangential.

In a second aspect thereof, the invention concerns a spoked bicycle wheel comprising a hub as described above.

In a preferred embodiment of the wheel of the invention, the at least one seat of the hub passes through the body of the hub in the longitudinal direction of the seat, a middle plane of the notch of the at least one seat is sloped by an acute angle with respect to a transversal plane of the hub, and a spoke comprising a flattened central portion having a size smaller than the width of the notch and oriented according to a transversal plane is housed in the at least one seat.

Through such provisions, if the spoke breaks it is not able to immediately come out from the seat since its flattened portion is not oriented according to the notch, and therefore it cannot unthread.

Preferably, the spoke comprises a flattened portion in close proximity to a head thereof, the flattened portion being inserted in the notch of the seat. Advantageously, the spoke is not able to rotate and its flattened central portion remains oriented according to the plane that most favours the aerodynamics of the wheel.

In another preferred embodiment of the wheel of the invention, the at least one seat of the hub passes through the body of the hub in the longitudinal direction of the seat and further comprises an undercut cavity with respect to the notch, and in the at least one seat a spoke is housed comprising a flattened central portion of a size smaller than the width of the notch and a joining collar between the flattened central portion and a head, the collar having a circular section with a diameter greater than the width L of the notch, and a flattened portion in close proximity to a head thereof, the flattened portion being inserted in the notch of the at least one seat.

Advantageously, the cylindrical part of the collar of the spoke is held by the undercut surfaces of the seat, while the flattened portion of the collar at least partially penetrates into the notch and prevents the spoke from rotating.

The flattened central portion of the spoke is preferably oriented substantially according to a transversal plane of the hub, the orientation being implied by the mutual orientation between the flattened central portion and the flattened portion of the collar.

Preferably, the flattened central portion of the spoke is at a distance from a head of the spoke greater than the length of the seat of the hub.

In the assembly step this allows the spoke to be moved back in the seat away from the rim, so that it is possible to insert the end of the spoke for connection to the rim in a nipple or nut without having to bend it.

Further features and advantages of the present invention shall become clearer from the following detailed description of some preferred embodiments thereof, made with reference to the attached drawings. In such drawings:
figure 1 shows a bicycle wheel according to the present invention;
figures 2 and 3 schematically show the deformation of the spokes of a wheel;
figure 4 shows a bicycle hub according to a first embodiment of the present invention, with a rotation bearing and an assembled spoke shown partially;
figure 5 shows a longitudinal view of the hub of figure 4, partially sectioned along an axial plane;
figure 6 is a detail of figure 5 in a magnified view;
figures 7 and 8 are sections according to planes VII and VIII of figure 5;
figure 9 is a section according to plane IX of figure 8;
figure 10 shows a spoke particularly suitable for being assembled on a hub according to the present invention;
figure 11 shows an assembling step of the spoke of figure 10;
figure 12 shows the spoke of figure 10 in the assembled condition in the hub;
figure 13 shows a section carried out along plane XIII of figure 12;
figure 14 shows a section carried out along plane XIV of figure 12; and
figures 15-21 show five further embodiments of the invention, wherein figure 18 is a magnified detail of the embodiment of figure 17, and figure 20 is a magnified detail of the embodiment of figure 19.

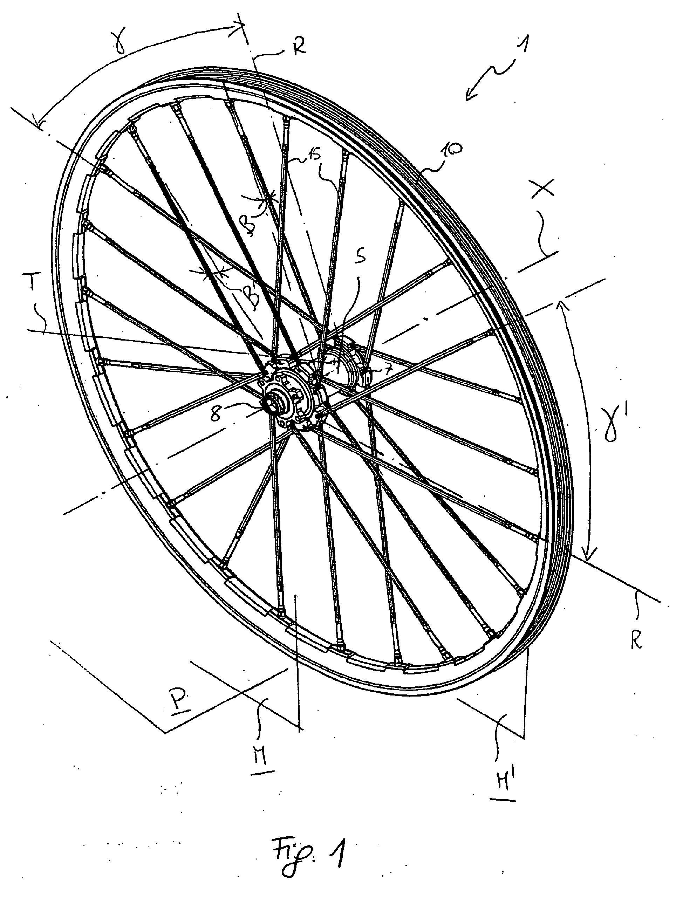

Figure 1 shows a wheel 1, comprising a hub 5 intended to be rotatably associated with the bicycle frame, a rim 10 on which the tyre is assembled, and a plurality of spokes 15 extending and tensioned between the hub 5 and the rim 10. The spokes 15 more specifically comprise a first family of spokes 15 extending close to a first axial end 7 of the hub 5, and two families of spokes 15 extending close to a second axial end 8 of the hub 5.

In the illustrated wheel 1, the projection of the direction of the spokes 15 on a plane M transversal to the rotation axis X is sloped by an angle GAMMA, GAMMA' with respect to the radial direction R, towards a direction T tangential to the hub 5. In the field the term "spokes with tangential attachment spokes" is used, which shall be used in the rest of the description for the sake of brevity, but in no way as limiting to spokes 15 extending from the hub 5 in a direction strictly coinciding with the geometric tangent T to the hub 5. The slope angle GAMMA, GAMMA' with respect to the radial direction R of the various families of spokes 15 is selected so that the spokes 15 of different families cross over, providing the wheel 1 with greater resistance against torsion.

In the illustrated wheel 1, moreover, the projection of the direction of the spokes 15 on an axial plane P, in other words in a plane comprising the rotation axis X, is sloped with respect to the transversal plane M, according to a camber angle BETA, BETA'. The camber angle BETA, BETA' of the spokes of the various families of spokes 15 can be the same or different.

Finally, in the illustrated wheel 1, the spokes 15 are attached to the rim 10 at the transversal middle plane M' and in positions equally spaced along its circumference.

A wheel according to the invention could also comprise one or more families of spokes with radial attachment to the hub 5, i.e. spokes extending in a direction the projection on a transversal plane M of which coincides with the radial direction R.

In a wheel according to the invention, moreover, the spokes 15 could be attached to the rim 10 in positions outside the transversal middle plane M' and/or in positions not equally spaced along its circumference, so as to form groups of spokes close together.

Finally, the number of spokes 15 of each family can be whatever.

In other words, as shall become clear upon reading the present description, the invention applies to any type of spoking of bicycle wheels.

As stated in the introductory part of the present description, in use of a wheel 1, the spokes 15, in addition to the tensile stress, are subject to other stresses.

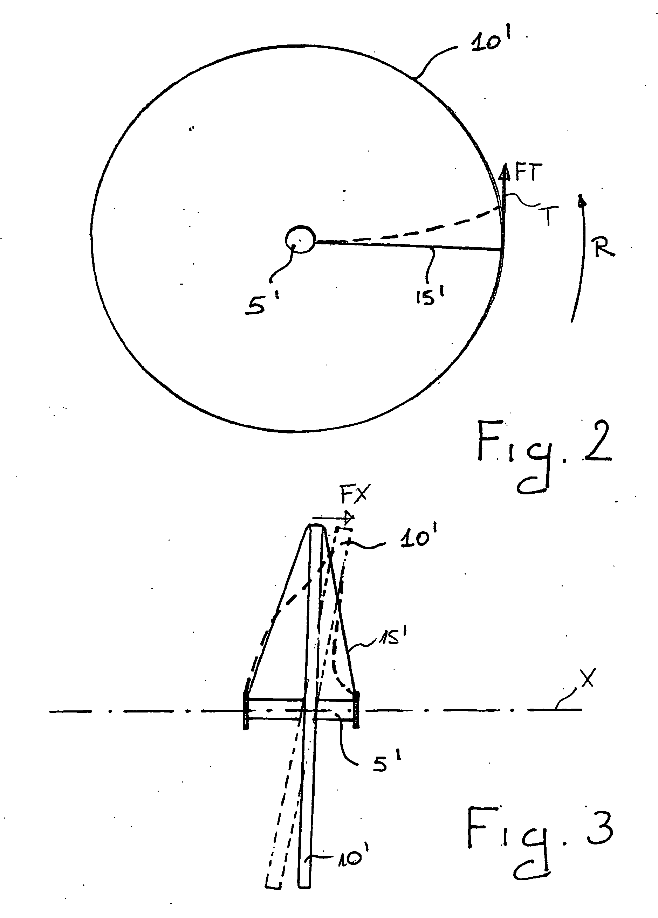

With reference to figure 2, during braking and acceleration of a wheel 1', the rim 10' has a relative rotation with respect to the hub 5', made possible by the flexibility of the spokes 15'. The spokes 15' are subject to stress FT substantially in the tangential direction T, deforming as shown with a dashed line.

With reference to figure 3, when the rim 10' and the hub 5' are offset to absorb an unevenness of the ground or a bump, or more simply to take a bend, the spokes 15' are subject to stress FX substantially in the axial direction X, deforming as shown with a dashed line.

As shall be understood upon reading the present description, the hub 5 according to the present invention allows the wheel 1 to be stiffened in the presence of such stresses FT, FX, still allowing easy assembling of the spokes 15.

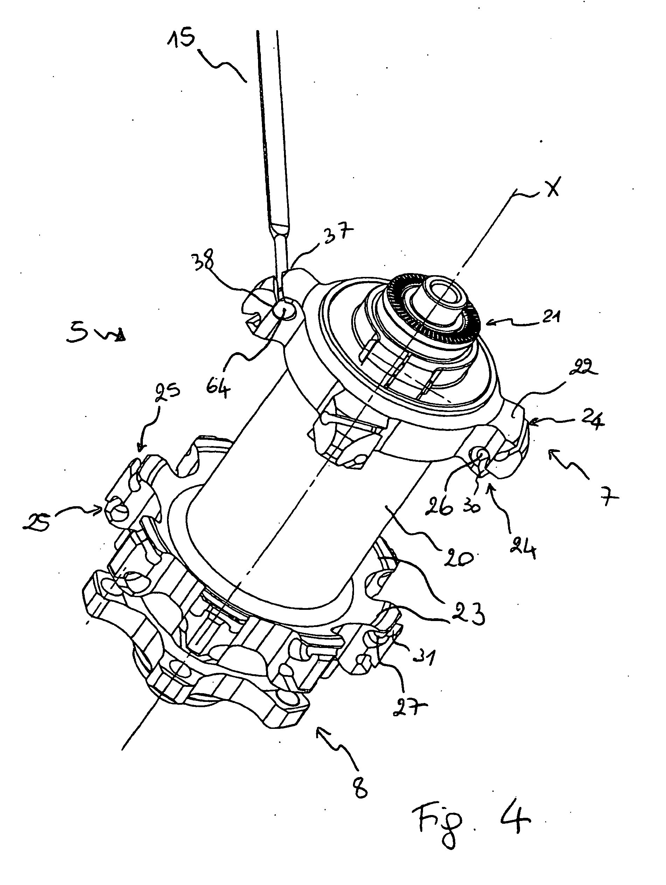

The hub 5, better illustrated in figure 4, comprises a substantially tubular main body 20. Through suitable bearings 21, the main body 20 of the hub 5 is rotatably associated with an inner shaft, in turn connected with the bicycle frame, to rotate about axis X.

At or near to its opposite ends 7 and 8 in the axial direction X, the hub 5 comprises a plurality of radially protruding spoke attachment elements 22, 23, in each of which two seats 24, 25 are formed, each for inserting and housing an end portion of a spoke 15. In other embodiments, each spoke attachment element 22 and/or 23 could comprise a single seat 24, 25. It should be noted that the end 8 of the hub 5 has a greater number of spoke attachment elements 23 than, more specifically twice, the number of elements 22 of the end 7, but as stated earlier this is not strictly necessary.

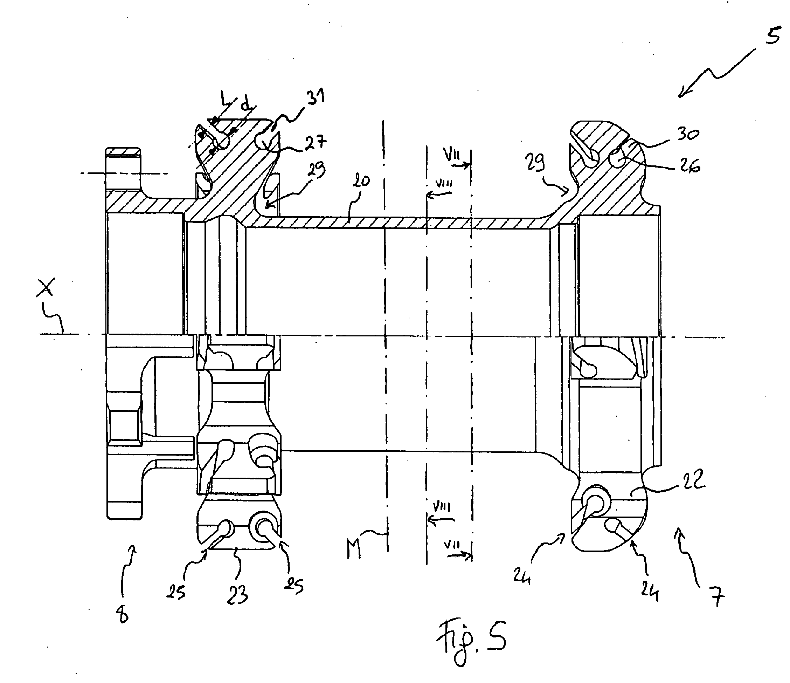

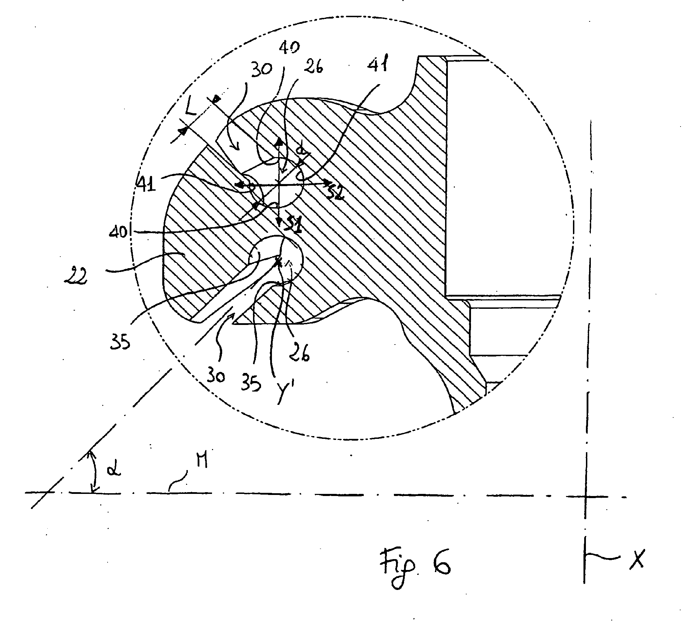

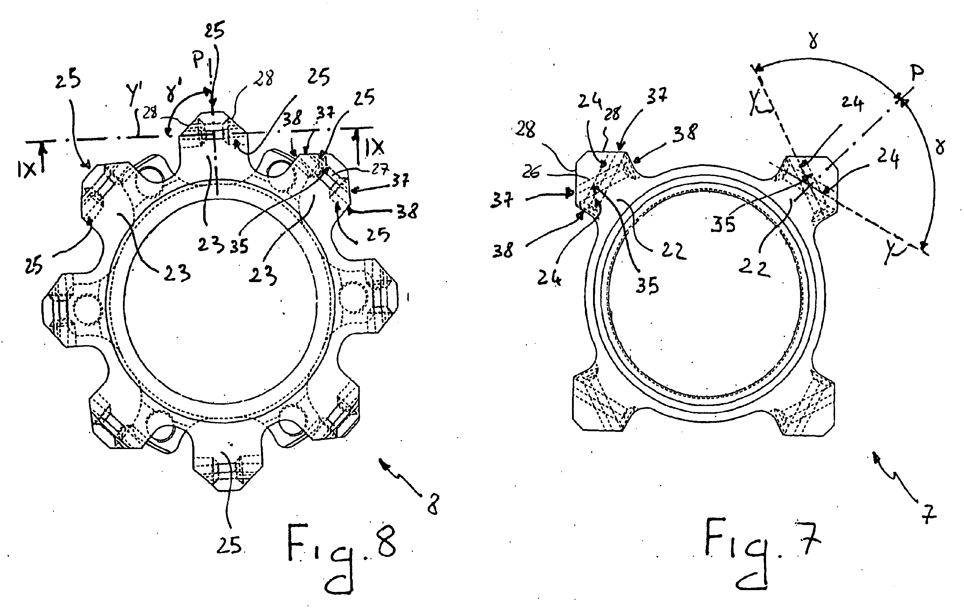

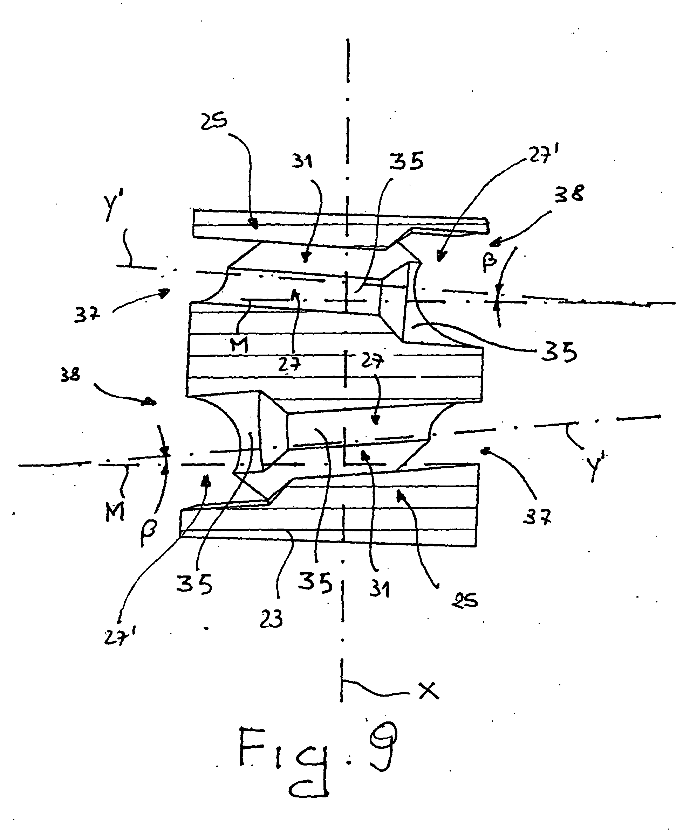

Figure 5 is a longitudinal view of the hub 5, partially sectioned along an axial plane P; figure 6 is a section carried out according to an axial plane P of a spoke attachment element 22; figures 7 and 8 are views of the opposite ends 7, 8 of the hub 5, more specifically they are sections carried out according to planes VII and VIII of figure 5; figure 9 is a view of a spoke attachment element 23 in a plane substantially tangential to the hub 5, more specifically it is a section carried out according to plane IX of figure 8.

With reference to such figures, each insertion and housing seat 24, 25 comprises a substantially cylindrical cavity 26, 27, communicating with the outside of the hub 5 through a notch 30, 31. The cavity 26, 27 passes through the spoke attachment element 22, 23 from a first end 37 to a second end 38. Although this is not essential, the second end 38 of the cavity 26, 27 is configured to at least partially house a widened head 64 at the free end of the spoke 15, while the cavity 26, 27 along the rest of its length has a diameter d. If the cavity 26, 27 were cylindrical along its entire length, namely without widened opening at the second end 38, the widened head 64 of the spoke 15 would project from the spoke attachment element 22, 23, it being held in the longitudinal direction Y, Y' of the seat 24, 25 by the outer surface of the spoke attachment element 22, 23 itself. It should be noted that, in case of spokes without a curved head, the longitudinal direction Y, Y' of the seat coincides with the longitudinal and tensioning direction of the spoke 15.

The notch 30, 31 also passes through the spoke attachment element 22, 23, and has a width L that is smaller than the diameter d of the cavity 26, 27.

Therefore, the cavity 26, 27 has undercut surfaces 35 (fig. 6) capable of preventing the end portion of the spoke 15, having at least one transversal dimension greater than L, from coming out through the notch 30, 31. It should be noted that the undercut surfaces 35 extend along the entire length of the cavities 26, 27 (fig. 9). The contact between the spoke 15 and the hub 5 is distributed over such extended undercut surfaces 35, for which reason concentrations of tensions are avoided and the risk of breaking is reduced.

The undercut surfaces 35 are preferably curved as illustrated, to further decrease the concentration of tensions in the assembled condition of the spoke.

The middle plane of the notch 30, 31 is sloped by an angle ALFA (fig. 6) with respect to a transversal plane M. The slope ALFA of the notch 30, 31 and its width L are selected so that the cavity 26, 27 has surfaces 40 for stopping the spoke 15 in both ways of the axial direction X, as indicated by the double arrow S1, and surfaces 41 for stopping the spoke 15 in both ways of a direction S2 (double arrow S2) perpendicular both to the axial direction X and to the longitudinal direction Y, Y' of the seat 24. In the case illustrated, in which the spoke 15 is with tangential attachment as defined above, the direction S2, is a radial direction R, neglecting the camber angle. It should be noted that near to the notch 30, 31, the cavity 26, 27 has surfaces that act simultaneously as undercut surfaces 35 and as stop surfaces 40, 41. It should also be noted that, since as illustrated the wall of the cavity 26, 27 is curved, in particular cylindrical, the surfaces indicated as 40 actually also act as stops in the direction S2, and vice-versa the surfaces indicated as 41 also act as stops in the direction S1, even if less effectively.

The illustrated angle ALFA is 45°, but it could be any angle between 10° and 80°, preferably 30° and 60°, more preferably between 40° and 50°. The slope can be selected according to the direction in which greater stiffness of the spoke and therefore of the wheel is preferred. If greater stiffness is desired in the axial direction X or S1, slope values ALFA close to the lower extreme of the range shall be preferred, vice-versa if greater stiffness is desired in the second direction S2, values close to the upper extreme of the range shall be preferred, while a slope selected among central values of the range will ensure a roughly equal stiffness in both directions S1, S2.

As is clear in figures 7 and 8, since the spokes 15 are of the type with tangential attachment to the hub 5, as defined above, the longitudinal direction Y of the seat, in particular of the cavity 26, at the first end 7 of the hub 5 is sloped by an angle GAMMA with respect to an axial plane P passing through the centre of the spoke attachment element 22, and the longitudinal direction Y' of the seat, in particular of the cavity 27, at the second end 8 of the hub 5 is sloped by an angle GAMMA' with respect to an axial plane P passing through the centre of the spoke attachment element 23. In the case illustrated, the angle GAMMA is less than the angle GAMMA', but in other types of spoking the two angles could be the same.

As is clear in figure 9, in order to provide the desired camber, the longitudinal direction Y (Y') of the seat is sloped by a camber angle BETA (BETA') with respect to a transversal plane M. The angles BETA and BETA' can be the same or different.

The two seats 24 (25) of a same spoke attachment element 22 (23) diverge, for which reason the spoke attachment element 22 (23) has, between the two seats 24 (25), a resisting section of variable thickness, which allows a suitable strength to be achieved without making the hub 5 excessively heavier.

Although this is not strictly necessary, in order to keep the weight low, the spoke attachment elements 22 and 23 are tapered in the radial direction, and are indented in the axial direction.

More specifically, the tapering in the radial direction, more manifest in figures 7 and 8, is obtained by the spoke attachment elements 22, 23 comprising opposite sloped surfaces 28, at which the first ends 37 of the cavities 26 and the first and second ends 37, 38 of the cavities 27 open. Alternatively, the opposite sloped surfaces 28 of the spoke attachment elements 22, 23 could be radially outside the cavities 26, 27.

The recess 29 in the axial direction X of the spoke attachment elements 22, 23 can be more or less accentuated and be formed on both opposite ends in the axial direction X of the spoke attachment elements 22, 23 as shown in figure 5, or at only one end.

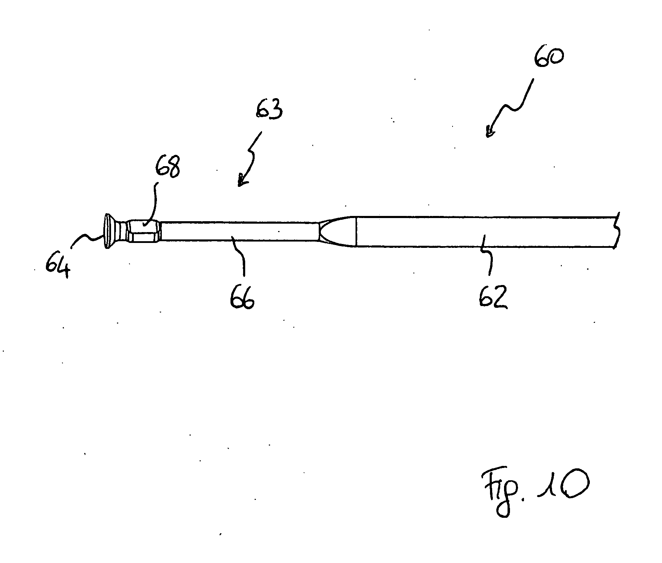

Figure 10 shows a spoke suitable for being coupled with the hub 5 of figures 4-9, globally indicated with reference numeral 60. The spoke 60 comprises a flattened central portion 62 and an end region 63 on the side for connection to the hub 5. At the opposite end, not shown, the spoke 60 typically comprises a threading for coupling with a nipple or with a nut for attachment to the rim 10.

The flattened central portion 62 has a substantially rectangular section, the shorter side being of a size smaller than or equal to the width L of the notch 30, 31.

The flattened central portion 62 of the spoke 60 could be replaced by a thinner central portion, of a size less than or equal to the width L of the notch 30, 31.

In the end region 63, the spoke 60 has a head 64 and a joining collar 66 between the flattened central portion 62 and the head 64. The collar 66 preferably has a circular section, with a diameter smaller than or equal to the diameter d of the cavities 26, 27, but greater than the width L of the notch 30, 31.

The collar 66 has a flattened portion 68 in close proximity to the head 64. The cross section of the flattened portion 68 of the collar 66 is substantially rectangular, the shorter side being of a size smaller than or equal to the width L of the notch 30, 31, and the longer side being of a size greater than the diameter of the collar 66, therefore constituting a protrusion with respect to the rest of the collar 66.

The flattened central portion 62 and the flattened portion 68 of the collar 66 are mutually sloped by an angle preferably equal to the angle ALFA formed between a middle plane M and the direction in which the notch 30, 31 extends.

In the assembling step of the spoke 60 in the hub 5, the flattened central portion 62 is initially inserted into the notch 30, 31, what is made possible by the fact that the size of its shorter side is less than or equal to the width L of the notch 30, 31.

Then the spoke 60 is slid in the longitudinal Y, Y' direction of the seat until the collar 66 partially penetrates in the cavity 26, 27 and the flattened central portion 62 is completely outside of the notch 30, 31, while the flattened portion 68 of the collar 66 has not yet entered therein.

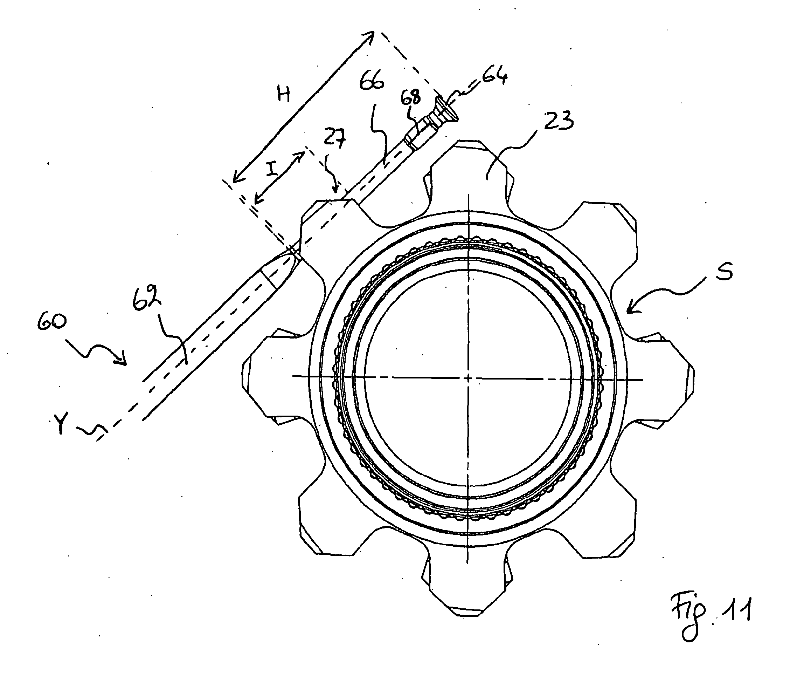

In this position, shown in figure 11, the spoke 60 is rotated until the flattened portion 68 of the collar 66 is oriented with its shorter side facing the width of the notch 30, 31 and therefore it can enter into the notch 30, 31. The rotation is made possible by the fact that the diameter of the collar 66 is less than or equal to the diameter d of the cavity 26, 27. The rotation therefore takes place by the angle ALFA or by its complement to 360°.

Preferably, the extension H of the end region 63 of the spoke 60 is greater than the length I of the cavity 26, 27 passing through the spoke attachment element 22, 23. During the assembling step this allows the spoke to be moved back in the cavity 26, 27 away from the rim 10, so that it is possible to insert the end of the spoke 60 for connection to the rim (not shown) into a nipple or nut (not shown) without having to bend it.

Finally, the spoke is slid in the longitudinal Y, Y' direction of the seat until the head 64 abuts against a surface 50 of the hub 5.

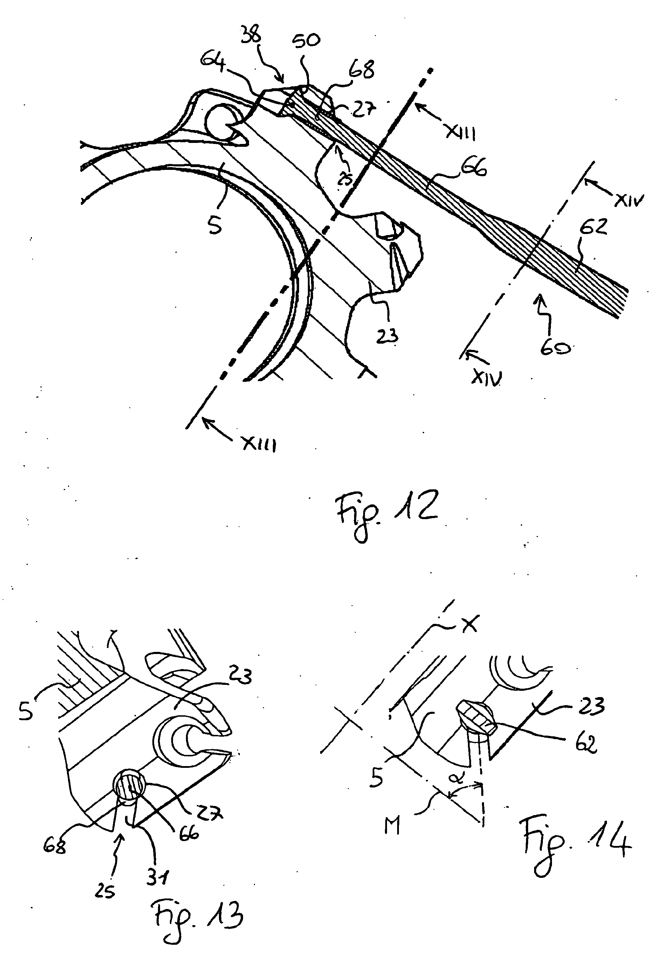

The assembled condition of the spoke 60 is shown in figure 12, which shows a partially removed section, carried out in a transversal plane M; in figure 13, which shows a section carried out along plane XIII of figure 12; and in figure 14, which shows a section carried out along plane XIV of figure 12.

With reference to such figures, in the assembled condition, the head 64 of the spoke 60 installs in the suitably shaped opening of the end 38 of the cavity 26, 27, or it projects outside of the hub 5 when such a shaping is absent. In any case, the hub 5 provides a stop surface 50 to hold the spoke in the longitudinal direction Y, Y' of the seat, in the tensioning way of the spoke 60.

In the assembled condition, moreover, the flattened portion 68 of the collar 66 partially penetrates into the notch 30, 31 (fig. 13) and prevents the rotation of the spoke 60, so that the flattened central portion 62 of the spoke 60 remains in a predetermined orientation (fig. 14). In particular, thanks to the aforementioned mutual orientation between the flattened central portion 62 and the flattened portion 68 of the collar 66, looking at the wheel 1 in the axial direction, the spoke has one of the major faces of the flattened central portion 62. Such an orientation favours the aerodynamics of the wheel 1 besides providing it with a desired appearance.

It should be noted that, in the assembled condition, the flattened central portion 62 of the spoke 60 is oriented differently from the notch 30, 31. In particular, the flattened central portion 62 of the spoke 60 is oriented substantially according to a transversal plane M, while the notch 30, 31 is sloped by the angle ALFA with respect to a transversal plane M. Consequently, in case the spoke 60 breaks, its flattened central portion 62 cannot pass immediately through the notch 30, 31, and therefore it does not accidentally come out from the seat 24, 25. Indeed, for the spoke 60 to come out from the seat 24, 25 it would have to reversely perform the movement described for assembling, and in particular to rotate until the flattened central portion 62 is precisely aligned with the notch 30, 31.

It should be understood that, as an alternative to the provision of the flattened portion 68 of the collar 66, different anti-rotation systems can be used.

The hub 5 according to the invention allows the spoke 60 to be easily connected thereto, since the provision of the notch 30, 31 allows it to be inserted in a different direction from the longitudinal direction Y, Y', of the seat and substantially transversal thereto, namely without having to unthread it along its entire length as it occurs in the case of spokes inserted head-first in seats only having a through hole.

The hub 5, thanks to the abutment surfaces 35 and the stop surfaces 40, 41 of the cavity 26, 27, as well as thanks to the abutment surface 50 for the head 64, also holds the spoke 5, once tensioned, substantially in all directions. The stiffness of the wheel 1 in conditions of braking, acceleration, taking bends and unevenness is therefore remarkably improved.

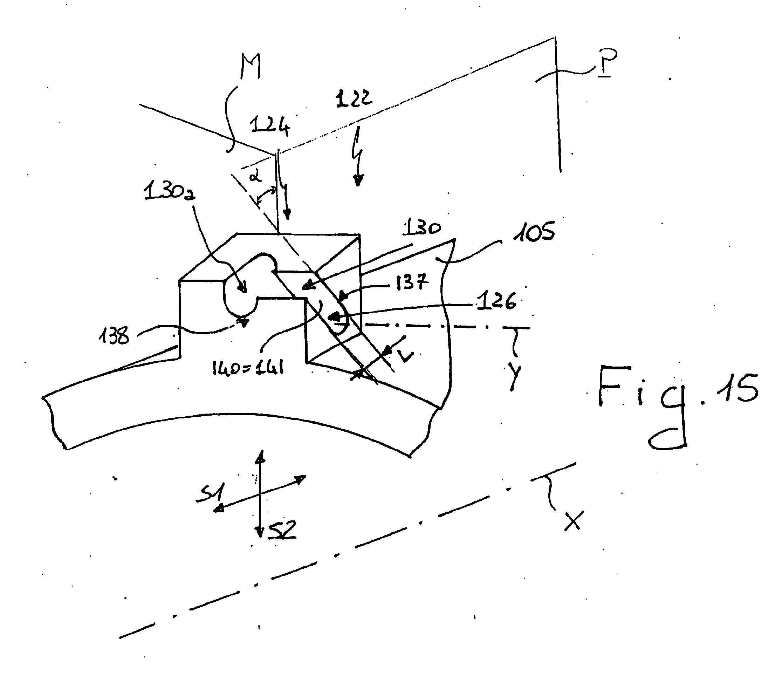

Figure 15 shows a portion of an embodiment of a hub 105 wherein a spoke attachment element 122, radially protruding from the hub 105, comprises a seat 124 for inserting and housing the spoke 15 (not shown) having an insertion notch 130 the botton of which forms a not passing-through housing cavity 126.

The cavity 126 communicates with the outside of the hub 105 only at a first end 137, while at the second end 138 it is shaped to receive the head 64 of the spoke 15. In order to allow the insertion of the head 64 of the spoke 15 into the seat 124, the notch 130 has a portion 130a of a width equal to or greater than the head 64. Also in this case, the spoke 15 is therefore easily inserted into the hub according to a direction different from the longitudinal direction Y of the seat 124, and substantially transversal thereto, namely without the need of unthreading it along its entire length.

The seat 124 lacks undercut surfaces towards the notch 126, and therefore the hub 105 is suitable for assembling spokes of any type, in particular of cylindrical spokes without the flattened central portion 62.

The slope ALFA of the notch with respect to a transversal plane M is selected so that the seat 124 has surfaces 140 and 141 for stopping the spoke 15 (not shown) in both ways of the axial direction X or S1, and in both ways of a direction S2 perpendicular both to the axial direction X and to the longitudinal direction Y of the seat, partially coinciding. It should be noted that also in this case, since the seat 124 is for the tangential-type attachment to the hub 105 and therefore the longitudinal direction Y of the seat is substantially tangential, the direction S2 is substantially radial.

The spoke attachment element 122 could be tapered in the radial direction and indented in the axial direction and/or comprise two or more spoke attachment seats 124.

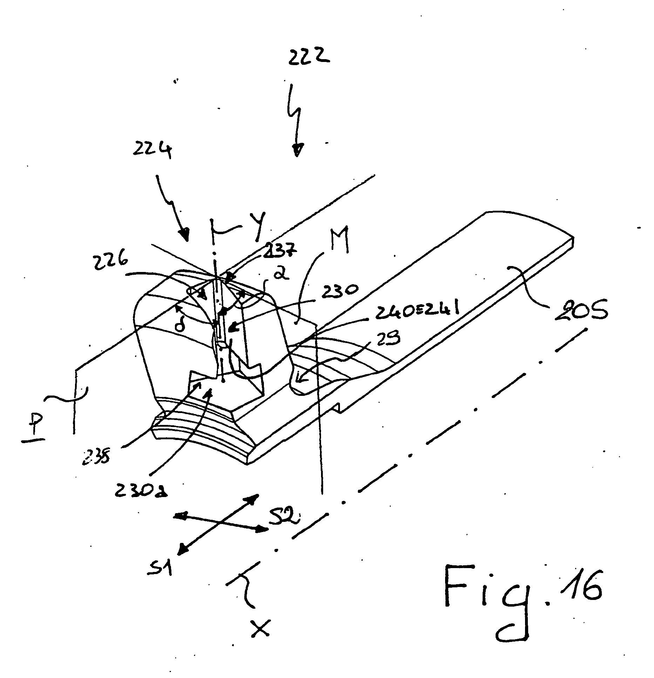

Figure 16 shows a portion of an embodiment of a hub 205 wherein a spoke attachment element 222, radially protruding from the hub 205, comprises a seat 224 for inserting and housing a radial attachment spoke 15 (not shown).

The seat 224 has an insertion notch 230, the botton of which forms a not passing-through housing cavity 226. The longitudinal direction Y of the seat 224 is substantially radial. Also in this case, the cavity 226 communicates with the outside of the hub 205 only at a first end 237, while at the second end 238 it is shaped to receive the head 64 of the spoke 15. In order to allow the insertion of the head 64 of the spoke 15 into the seat 224, the notch 230 has a portion 230a of a width equal to or greater than the head 64. Also in this case, the spoke 15 is therefore easily inserted into the hub according to a direction different from the longitudinal direction Y of the seat, and substantially transversal thereto, namely without the need of threading it along its entire length.

The seat 224 lacks undercut surfaces towards the notch 230 and therefore the hub 205 is also suitable for assembling spokes of any type, in particular cylindrical spokes without the flattened central portion 62.

The notch 226 is sloped with respect to an axial plane P by an angle DELTA, and with respect to a transversal plane M by a complementary angle ALFA. The slope is selected so that the seat 224 has surfaces 240 and 241 for stopping the spoke 15 (not shown) in both ways of the axial direction X, as indicated by the double arrow S1, and in both ways of a direction S2 perpendicular both to the axial direction X and to the longitudinal direction Y of the seat, partially coinciding. It should be noted that in this case, since the seat 224 is for radial-type attachment to the hub 205 and therefore the longitudinal direction Y of the seat is substantially radial, the direction S2 is substantially tangential.

The spoke attachment element 222 could also be tapered in the radial direction and indented in the axial direction and/or comprise two or more spoke attachment seats 224.

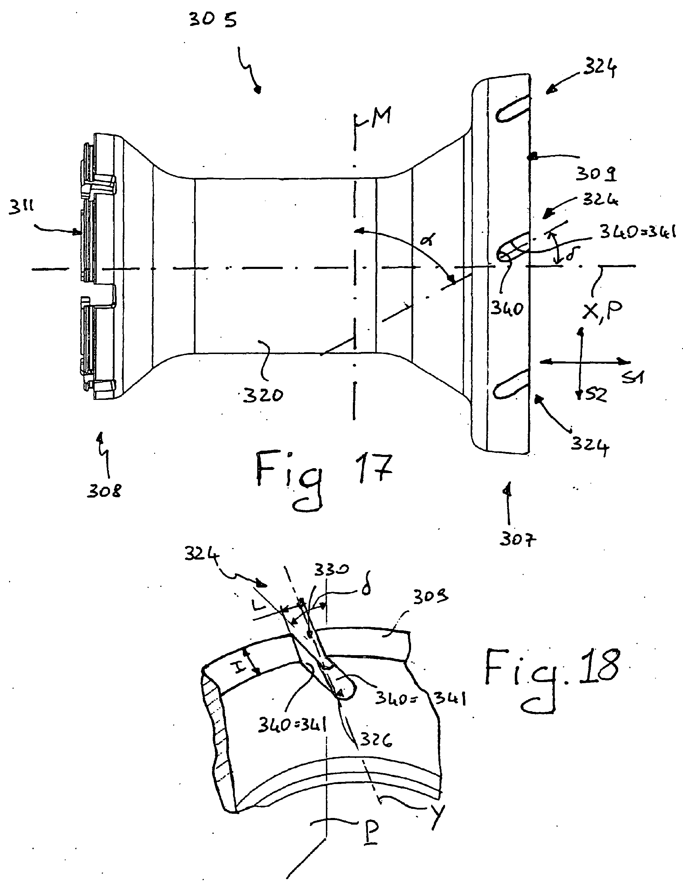

Figures 17 and 18 show an embodiment of a hub 305 having seats 324 for radial-type insertion and housing of a respective spoke 15 (not shown).

The hub 305 comprises a substantially tubular body 320 bounded at the two ends 307 and 308, opposite in the axial direction X, respectively by an annular front surface 309 and by an annular front surface 311.

Each seat 324 comprises an insertion notch 330 of a width L, extending in the body 320 from the annular front surface 309, the botton of which defines a housing cavity 326. The notch 330 and the cavity 326 pass through the thickness I of the end 307 (figure 18). The notch 320 is sloped by an angle ALFA with respect to a transversal plane M, and by a complementary angle DELTA with respect to an axial plane P. The slope is selected so that the seat 324 has surfaces 340 and 341 for stopping the spoke 15 (not shown) in both ways of the axial direction X, as indicated by the double arrow S1, and in both ways of a direction S2 perpendicular both to the axial direction X and to a longitudinal direction Y of the seat, partially coinciding. It should be noted that in this case, since the seat 324 is for radial-type attachment to the hub 305 and therefore the longitudinal direction Y of the seat is substantially radial, the direction S2 is substantially tangential.

At the end 308 of the hub 305 seats similar to, or different from, the seats 324 of the end 307, can be provided.

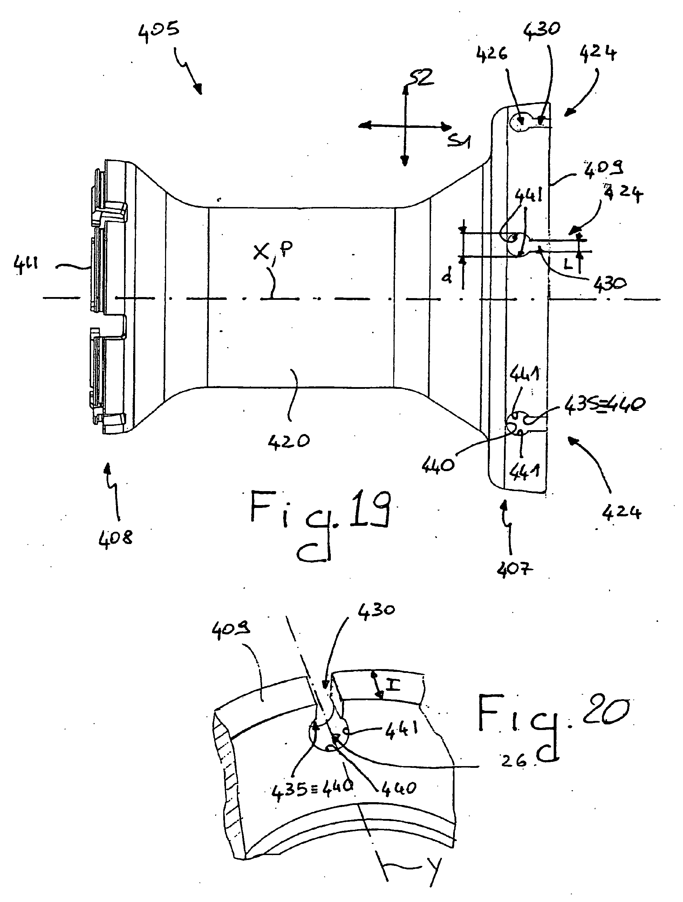

It should be noted that in general the slope ALFA or respectively DELTA of the notch 330 suffices for the seat 324 to have surfaces 340 and 341 in both directions S1 and S2. Therefore, given that the notch 330 passes through, it is also possible to make a cavity with a diameter d greater than the width L of the notch, namely to provide for undercut surfaces similar to the surfaces 35 to further retain the spoke 15, which shall in this case be provided with a flattened central portion 62, against coming out through the notch 330, similarly to the embodiment of figures 19 and 20 described hereafter.

Figures 19 and 20 show an embodiment of a hub 405 having seats 424 for radial-type insertion and housing of a respective spoke 15 (not shown).

The hub 405 comprises a substantially tubular body 420 bounded at the two opposite ends 407 and 408 in the axial direction X by an annular front surface 409 and by an annular front surface 411, respectively.

Each seat 424 comprises an insertion notch 430 extending in the body 420 from the annular front surface 409, and a cavity 426. The notch 430 and the cavity 426 pass through the thickness I of the end 407 (figure 20).

The middle plane of the notch 430 is an axial plane P and the longitudinal direction Y of the seat is substantially radial. The seat 424 in any case has surfaces 440, 441 for stopping the spoke in both ways of the axial direction X, S1, and in both ways of a direction S2 perpendicular both to the axial direction X and to the longitudinal direction Y of the seat. The direction S2 is substantially tangential. The direction S1 is substantially axial, namely within the plane P of the notch, however the cavity 426 has a diameter d greater than the width L of the notch 430 for which reason the seat 424 has undercut surfaces 435 that act as said stop surfaces 440 in direction S1.

At the end 408 of the hub 405 seats similar to, or different from, the seats 424 of the end 407 can be provided.

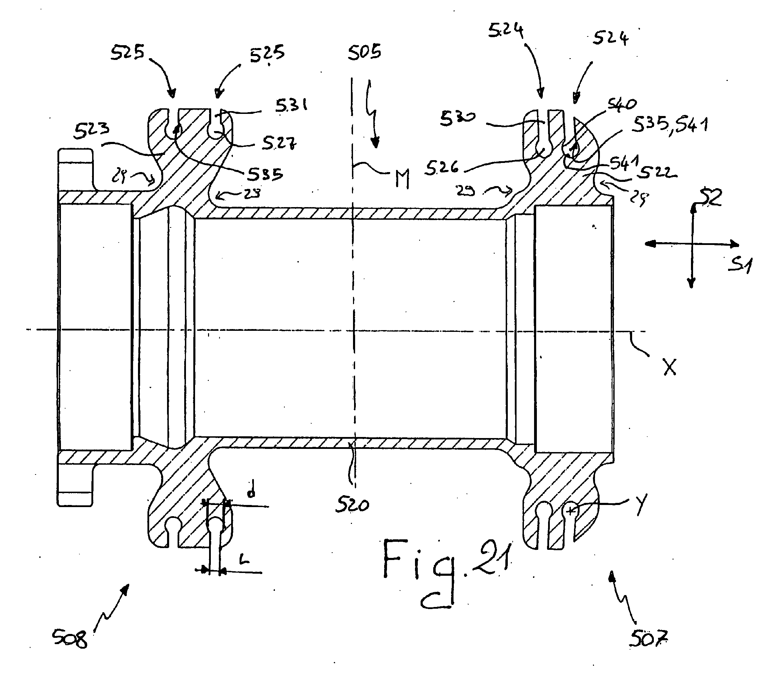

Figure 21 shows an embodiment of a hub 505 having seats 524, 525 for tangential-type insertion and housing of a respective spoke 15 (not shown).

The hub 505 comprises a substantially tubular body 520 near to the ends 507 and 508 of which, opposite in the axial direction X, there are radially protruding spoke attachment elements 522 and 523. A pair of seats 524, 525 are formed on each spoke attachment element 522, 523.

Each seat 524, 525 comprises a substantially cylindrical cavity 526, 527, communicating with the outside of the hub 505 through a notch 530, 531. The cavity 526, 527 and the notch 530, 531 pass through the spoke attachment element 522, 523.

The middle plane of the notch 530, 531 is a transversal plane M, and the longitudinal direction Y of the seat 524, 525 is substantially tangential. The seat 524, 525 in any case has surfaces 540, 541 for stopping the spoke in both ways of the axial direction X, S1, and in both ways of a direction S2 perpendicular both to the axial direction X and to the longitudinal direction Y of the seat. The direction S2 is, indeed, substantially radial, namely within the plane M of the notch, however the cavity 526, 527 has a diameter d greater than the width L of the notch 530, 531 for which reason the seat 524, 525 has undercut surfaces 535 that act as said stop surfaces 541 in the direction S2.

The hubs 105, 205, 305, 405, 505, thanks to the configurations of their seats for inserting and housing the spokes, also allow easy insertion of the spokes in a direction different from, and substantially transversal to, the longitudinal direction of the seat or tensioning direction in the case of spokes not having a curved head, and therefore without the need of unthreading them along their entire length, as well as hold the spokes, once tensioned, substantially in all directions. The stiffness of a wheel 1 having a hub 105, 205, 305, 405, 505 according to the invention in conditions of braking, acceleration, taking bends and unevenness is therefore remarkably improved.

From the previous description it shall be understood that, on the one hand, the provision of a seat having undercut surfaces towards the insertion notch implies that it has a cavity and a notch that pass through, and it implies the provision of a flattened central portion in the spoke to allow it to be assembled; the through notch can, however, extend in a transversal or respectively axial plane.

On the other hand, the provision of a notch extending according to a plane sloped with respect to a transversal or respectively axial plane provides stop surfaces suitable for holding the spoke even without an undercut cavity, and it allows the insertion of a spoke without a flattened central portion; the seat can in this case also pass through or be blind.

A hub according to the invention could comprise seats for inserting and housing the spokes made both in radially protruding spoke attachment elements and in the thickness of one or both of its ends. It should also be noted that any number of seats, even only one, can be made in each radially protruding spoke attachment element.

## Claims

1. Hub (5; 105; 205; 305; 405; 505) for a spoked bicycle wheel (1), comprising at least one seat (24, 25; 124; 224; 324; 424; 524, 525) for inserting and housing an end portion of a spoke (15, 60), said at least one seat (24, 25; 124; 224; 324; 424; 524, 525) comprising a notch (30, 31; 130; 230; 330; 430; 530, 531) shaped for the insertion of a spoke (15, 60) in a different direction from a longitudinal direction of the seat (Y, Y'), and surfaces (40, 41; 140, 141; 240, 241; 340, 341; 440, 441; 540, 541) for stopping the spoke (15, 60) both in both ways of a direction (X, S1) of a rotation axis of the hub (5; 105; 205; 305; 405; 505), and in both ways of a second direction (S2) perpendicular both to the axial direction (X, S1) and to the longitudinal direction (Y, Y') of the seat.

2. Hub (5; 105; 205; 305; 405; 505) according to claim 1, **characterised in that** the notch (30, 31; 130; 230; 330; 430; 530, 531) is shaped for the insertion of a spoke (15, 60) in a direction perpendicular to the longitudinal direction (Y, Y') of the seat.

3. Hub (5; 105; 205; 305) according to claim 1 or 2, **characterised in that** a middle plane of the notch (30, 31; 130; 230; 330) is sloped with respect to the axial direction (X, S1) and to the second direction (S2).

4. Hub (5; 105; 205; 305) according to claim 3, **characterised in that** the middle plane of the notch (30, 31; 130; 230; 330) is sloped by an acute angle (ALFA) with respect to a transversal plane (M) of the hub (5).

5. Hub (5; 105; 205; 305) according to claim 4, **characterised in that** said acute angle (ALFA) is between 10° and 80°.

6. Hub (5; 105; 205; 305) according to claim 5, **characterised in that** said acute angle (ALFA) is between 30° and 60°.

7. Hub (5; 105; 205; 305) according to claim 6, **characterised in that** said acute angle (ALFA) is between 40° and 50°.

8. Hub (105; 205) according to any of claims 3 to 7, **characterised in that** said at least one seat (124; 224) is blind in the longitudinal direction of the seat (Y), it being wider at the blind end (130a, 138; 230a, 238).

9. Hub (5; 305) according to any of claims 3 to 7, **characterised in that** said at least one seat (24, 25; 324) passes through the body of the hub (5; 305) in the longitudinal direction (Y, Y') of the seat.

10. Hub (5) according to claim 9, **characterised in that** said at least one seat (24, 25) further comprises a cavity (26, 27) undercut with respect to the notch (30, 31).

11. Hub (5; 405; 505) according to any of claims 1-7, **characterised in that** said at least one seat (24, 25; 424; 524, 525) passes through the body of the hub (5; 405; 505) in the longitudinal direction (Y, Y') of the seat, and it further comprises a cavity (26, 27; 426; 526, 527) undercut with respect to the notch (30, 31; 430; 530, 531).

12. Hub (5; 405; 505) according to claim 10 or 11, **characterised in that** the cavity (26, 27; 426; 526, 527) is undercut with respect to the notch (30, 31; 430; 530, 531) along its entire length (I).

13. Hub (5; 405; 505) according to any of claims 10-12, **characterised in that** the undercut surfaces (35; 435; 535) of the seat (24, 25; 424; 524, 525) at least partially make up said surfaces (40, 41; 440, 441; 540, 541) for stopping in the axial direction (X, S1) and/or in the second direction (S2).

14. Hub (5; 405; 505) according to any of claims 10-13, **characterised in that** the undercut surfaces (35; 435; 535) of the seat (24, 25; 424; 524, 525) are curved.

15. Hub (5; 105; 205; 305; 405; 505) according to any of the previous claims, **characterised in that** the seat (24, 25; 124; 224; 324; 424; 524, 525) comprises walls extending parallel to the longitudinal direction (Y, Y') of the seat, the longitudinal direction (Y, Y') of the seat being sloped (BETA, BETA') with respect to a transversal plane (M) of the hub (5; 105; 205; 305; 405; 505).

16. Hub (5; 105; 205; 305; 405; 505) according to claim 15, **characterised in that** said slope (BETA, BETA') coincides with a camber angle of the wheel.

17. Hub (5; 105; 205; 505) according to any of the previous claims, **characterised by** comprising at least one spoke attachment element (22, 23; 122; 222; 522, 523) radially protruding from the hub (5; 105; 205; 505) near to an axial end thereof (7, 8; 507, 508), said at least one seat (24, 25; 124; 224; 524, 525) being formed in said at least one spoke attachment element (22, 23; 122; 222; 522, 523).

18. Hub (5; 105; 205; 505) according to claim 17, **characterised in that** in each spoke attachment element (22, 23; 122; 222; 522, 523) at least two seats (24, 25; 124; 224; 524, 525) are formed.

19. Hub (5; 105; 205; 522, 523) according to claim 18, **characterised in that** said at least two seats (24, 25; 124; 224; 524, 525) formed in a same spoke attachment element (22, 23; 122; 222; 522, 523) extend according to camber angles (BETA, BETA') diverging from each other with respect to a transversal plane (M) of the hub (5; 105; 205; 505).

20. Hub (5; 505) according to any of claims 17-19, **characterised in that** each spoke attachment element (22, 23; 522, 523) is at least partially tapered in the radial direction (R).

21. Hub (5; 505) according to claim 20, **characterised in that** each spoke attachment element (22, 23; 522, 523) comprises opposite sloped surfaces (28), at which at least one of the ends (37, 38) of a cavity (26, 27; 526, 527) of the seat (24, 25; 524, 525) opens.

22. Hub (5; 505) according to claim 21, **characterised in that** each spoke attachment element (22, 23; 522, 523) comprises opposite sloped surfaces (28) radially outside at least one of the ends (37, 38) of the cavity (26, 27; 526, 527) of the seat (24, 25; 524, 525).

23. Hub (5; 205; 505) according to any of claims 17-22, **characterised in that** each spoke attachment element (22, 23; 222; 522, 523) is indented in the axial direction at at least one of its opposite ends in the axial direction (X).

24. Hub (305; 405) according to any of claims 1-16, **characterised by** comprising, at at least one of its axial ends (307, 308; 407, 408), an annular surface (309, 311; 409, 411), the notch (330; 430) of said at least one seat (324; 424) extending from said annular surface (309, 311; 409, 411).

25. Hub (5; 105; 505) according to any of the previous claims, **characterised in that** the longitudinal direction (Y, Y') of said at least one seat (24, 25; 124; 524, 525) is substantially tangential.

26. Hub (205; 305; 405) according to any of claims 1-25, **characterised in that** the longitudinal direction (Y, Y') of said at least one seat (204; 324; 424) is substantially radial.

27. Spoked bicycle wheel (1), comprising a hub (5; 105; 205; 305; 405; 505) according to any of claims 1-26.

28. Spoked bicycle wheel (1) according to claim 27, wherein the at least one seat (24, 25; 324) of the hub (5; 305) passes through the body of the hub (5; 305) according to a longitudinal direction (Y, Y'), a middle plane of the notch (30, 31; 330) of the at least one seat (24, 25; 324) is sloped by an acute angle (ALFA) with respect to a transversal plane (M) of the hub and in the at least one seat (24, 25; 324) a spoke (15, 60) is housed comprising a flattened central portion (62) of a size smaller than the width (L) of the notch (30, 31; 330) and oriented according to a transversal plane (M).

29. Spoked bicycle wheel (1) according to claim 28, **characterised in that** the spoke (60) comprises a flattened portion (68) in close proximity to a head (64) thereof, the flattened portion (68) being inserted in the notch (30, 31; 330) of the at least one seat (24, 25; 324).

30. Spoked bicycle wheel (1) according to claim 27, wherein the at least one seat (24, 25; 424; 524) of the hub (5; 405; 505) passes through the body of the hub (5; 405; 505) in a longitudinal direction (Y, Y'), of the seat and further comprises a cavity (26, 27; 426; 526, 527) undercut with respect to the notch (30, 31; 430; 530, 531), and in the at least one seat (24, 25; 424; 524) a spoke (15, 60) is housed comprising a flattened central portion (62) of a size smaller than the width (L) of the notch (30, 31; 430; 530, 531) and a joining collar (66) between the flattened central portion (62) and a head (64), the collar (66) having a circular section with a greater diameter than the width (L) of the notch (30, 31; 430; 530, 531) and a flattened portion (68) in close proximity to a head (64) thereof, the flattened portion (68) being inserted in the notch (30, 31; 330) of the at least one seat (24, 25; 324).

31. Spoked bicycle wheel (1) according to claim 30, **characterised in that** the flattened central portion (62) of the spoke (60) is oriented substantially according to a transversal plane (M) of the hub (5; 405; 505), the orientation being implied by the mutual orientation (ALFA) between the flattened central portion (62) and the flattened portion (68) of the collar (66).

32. Spoked bicycle wheel according to any of claims 28-31, **characterised in that** the flattened central portion (62) of the spoke (60) is at a distance (H) from a head (64) of the spoke (60) greater than the length (I) of the seat (24, 25; 324; 424; 524, 525) of the hub (5; 305; 405; 505).

## Patentansprüche

1. Nabe (5; 105; 205; 305; 405; 505) für ein Fahrradspeichenrad (1), enthaltend wenigstens einen Sitz (24, 25; 124; 224; 324; 424; 524; 525) zum Einfügen und Aufnehmen eines Endabschnittes einer Speiche (15, 60), wobei der wenigstens eine Sitz (24, 25; 124; 224; 324; 424; 524; 525) eine Ausnehmung (30, 31; 130; 230; 330; 430; 530, 531), die für das Einfügen einer Speiche (15, 60) in einer anderen Richtung als einer Längsrichtung (Y, Y') des Sitzes ausgeformt ist, und Oberflächen (40, 41; 140; 141; 240, 241; 340, 341; 440, 441; 540, 541) hat, die die Speiche (15, 60) in zweifacher Weise einer Richtung (X, S1) einer Drehachse der Nabe (5; 105; 205; 305; 405; 505) und in zweifacher Weise einer zweiten Richtung (S2) senkrecht sowohl zur Achsrichtung (X, S1) als auch zur Längsrichtung (Y,Y') des Sitzes stoppen.

2. Nabe (5; 105; 205; 305; 405; 505) nach Anspruch 1, **dadurch gekennzeichnet, dass** die Ausnehmung (30, 31; 130; 230; 330; 430; 530, 531) für das Einfügen einer Speiche (15, 60) in einer Richtung senkrecht zur Längsrichtung (Y, Y') des Sitzes ausgeformt ist.

3. Nabe (5; 105; 205; 305) nach Anspruch 1 oder 2, **dadurch gekennzeichnet, dass** die Mittelebene der Ausnehmung (30, 31; 130; 230; 330) im Bezug auf die Achsrichtung (X, S1) und die zweite Richtung (S2) geneigt ist.

4. Nabe (5; 105; 205; 305) nach Anspruch 3, **dadurch gekennzeichnet, dass** die Mittelebene der Ausnehmung (30, 31; 130; 230; 330) in einem spitzen Winkel (ALFA) im Bezug auf eine transversale Ebene (M) der Nabe (5) geneigt ist.

5. Nabe (5; 105; 205; 305) nach Anspruch 4, **dadurch gekennzeichnet, dass** der spitze Winkel (ALFA) zwischen 10° und 80° beträgt.

6. Nabe (5; 105; 205; 305) nach Anspruch 5, **dadurch gekennzeichnet, dass** der spitze Winkel (ALFA) zwischen 30° und 60° liegt.

7. Nabe (5; 105; 205; 305) nach Anspruch 6, **dadurch gekennzeichnet, dass** der spitze Winkel (ALFA) zwischen 40° und 50° liegt.

8. Nabe (105; 205) nach einem der Ansprüche 3 bis 7, **dadurch gekennzeichnet, dass** der wenigstens eine Sitz (124; 224) in der Längsrichtung (Y) des Sitzes geschlossen ist und an dem geschlossenen Ende (130a, 138; 230a, 238) breiter ist.

9. Nabe (5; 305) nach einem der Ansprüche 3 bis 7, **dadurch gekennzeichnet, dass** der wenigstens eine Sitz (24, 25; 324) durch den Körper der Nabe (5; 305) in der Längsrichtung (Y, Y') des Sitzes verläuft.

10. Nabe (5) nach Anspruch 9, **dadurch gekennzeichnet, dass** der wenigstens eine Sitz (24, 25) weiterhin einen Hohlraum (26, 27) hat, der im Bezug auf die Ausnehmung (30, 31) hinterschnitten ist.

11. Nabe (5; 405; 505) nach einem der Ansprüche 1 bis 7, **dadurch gekennzeichnet, dass** der wenigstens eine Sitz (24, 25; 424; 524; 525) durch den Körper der Nabe (5; 405; 505) in der Längsrichtung (Y, Y') des Sitzes verläuft und weiterhin einen Hohlraum (26, 27; 426; 526, 527) enthält, der im Bezug auf die Ausnehmung (30, 31; 430; 530, 531) hinterschnitten ist.

12. Nabe (5; 405; 505) nach Anspruch 10 oder 11, **dadurch gekennzeichnet, dass** der Hohlraum (26, 27; 426; 526, 527) im Bezug auf die Ausnehmung (30, 31; 430; 530, 531) entlang seiner gesamten Länge (1) hinterschnitten ist.

13. Nabe (5; 405; 505) nach einem der Ansprüche 10 bis 12, **dadurch gekennzeichnet, dass** die hinterschnittenen Oberflächen (35; 435; 535) des Sitzes (24, 25; 424; 524, 525) wenigstens teilweise die Oberflächen (40, 41; 440, 441; 540, 541) zum Stoppen in der Achsrichtung (X, S1) und/oder in der zweiten Richtung (S2) bilden.

14. Nabe (5; 405; 505) nach einem der Ansprüche 10 bis 13, **dadurch gekennzeichnet, dass** die hinterschnittenen Oberflächen (35; 435; 535) des Sitzes (24, 25; 424; 524, 525) gekrümmt sind.

15. Nabe (5; 105; 205; 305; 405; 505) nach einem der vorhergehenden Ansprüche, **dadurch gekennzeichnet, dass** der Sitz (24, 25; 124; 224; 324; 424; 524, 525) Wände enthält, die sich parallel zur Längsrichtung (Y, Y') des Sitzes erstrecken, wobei die Längsrichtung (Y, Y') des Sitzes im Bezug auf eine transversale Ebene (M) der Nabe (5; 105; 205; 305; 405; 505) geneigt ist (BETA, BETA').

16. Nabe (5; 105; 205; 305; 405; 505) nach Anspruch 15, **dadurch gekennzeichnet, dass** die Neigung (BETA, BETA') mit einem Querneigungswinkel des Rades übereinstimmt.

17. Nabe (5; 105; 205; 505) nach einem der vorhergehenden Ansprüche, **dadurch gekennzeichnet, dass** sie wenigstens ein Speichenanbringungselement (22, 23; 122; 222; 522, 523) enthält, das von der Nabe (5; 105; 205; 505) in der Nähe eines axialen Endes (7, 8; 507, 508) derselben radial hervorsteht, wobei der wenigstens eine Sitz (24, 25; 124; 224; 524; 525) in dem wenigstens einen Speichenanbringungselement (22, 23; 122; 222; 522, 523) ausgebildet ist.

18. Nabe (5; 105; 205; 505) nach Anspruch 17, **dadurch gekennzeichnet, dass** in jedem Speichenanbringungselement (22, 23; 122; 222; 522, 523) wenigstens zwei Sitze (24, 25; 124; 224; 524; 525) ausgebildet sind.

19. Nabe (5; 105; 205; 522, 523) nach Anspruch 18, **dadurch gekennzeichnet, dass** sich die wenigstens zwei Sitze (24, 25; 124; 224; 524; 525), die in demselben Speichenanbringungselement (22, 23; 122; 222; 522, 523) ausgebildet sind, gemäß Querneigungswinkeln (BETA, BETA') erstrecken, die voneinander im Bezug auf die transversale Ebene (M) der Nabe (5; 105; 205; 505) divergieren.

20. Nabe (5; 505) nach einem der Ansprüche 17 bis 19, **dadurch gekennzeichnet, dass** jedes Speichenanbringungselement (22, 23; 522, 523) wenigstens teilweise in der radialen Richtung (R) abgeschrägt ist.

21. Nabe (5; 505) nach Anspruch 20, **dadurch gekennzeichnet, dass** jedes Speichenanbringungselement (22, 23; 522, 523) gegenüberliegende geneigte Oberflächen (28) hat, an denen sich wenigstens eines der Enden (37, 38) eines Hohlraums (26, 27; 526, 527) des Sitzes (24, 25; 524, 525) öffnet.

22. Nabe (5; 505) nach Anspruch 21, **dadurch gekennzeichnet, dass** jedes Speichenanbringungselement (22, 23; 522, 523) gegenüberliegende geneigte Oberflächen (28) radial außerhalb wenigstens eines der Enden (37, 38) des Hohlraums (26, 27; 526, 527) des Sitzes (24, 25; 524, 525) enthält.

23. Nabe (5; 205; 505) nach einem der Ansprüche 17 bis 22, **dadurch gekennzeichnet, dass** jedes Speichenanbringungselement (22, 23; 222; 522, 523) in der Achsrichtung an wenigstens einem seiner gegenüberliegenden Enden in der Achsrichtung (X) eingekerbt ist.

24. Nabe (305; 405) nach einem der Ansprüche 1 bis 16, **dadurch gekennzeichnet, dass** sie an wenigstens einem ihrer axialen Enden (307, 308; 407, 408) eine ringförmige Oberfläche (309, 311; 409, 411) enthält, wobei sich die Ausnehmung (330; 430) des wenigstens einen Sitzes (324; 424) von der ringförmigen Oberfläche (309, 311; 409, 411) erstreckt.

25. Nabe (5; 105; 505) nach einem der vorhergehenden Ansprüche, **dadurch gekennzeichnet, dass** die Längsrichtung (Y, Y') des wenigstens einen Sitzes (24, 25; 124; 524, 525) im wesentlichen tangential ist.

26. Nabe (205; 305; 405) nach einem der Ansprüche 1 bis 25, **dadurch gekennzeichnet, dass** die Längsrichtung (Y, Y') des wenigstens einen Sitzes (204; 324; 424) im wesentlichen radial ist.

27. Fahrradspeichenrad (1), enthaltend eine Nabe (5; 105; 205; 305; 405; 505) nach einem der Ansprüche 1 bis 26.

28. Fahrradspeichenrad (1) nach Anspruch 27, bei dem der wenigstens eine Sitz (24, 25; 324) der Nabe (5; 305) durch den Körper der Nabe (5; 305) gemäß einer Längsrichtung (Y, Y') verläuft, eine Mittelebene der Ausnehmung (30, 31; 330) des wenigstens einen Sitzes (24, 25; 324) in einem spitzen Winkel (ALFA) im Bezug auf die transversale Ebene (M) der Nabe geneigt ist und in dem wenigstens einen Sitz (24, 25; 324) eine Speiche (15, 60) aufgenommen ist, die einen abgeflachten zentralen Abschnitt (62) einer Größe enthält, die geringer ist als die Breite (L) der Ausnehmung (30, 31; 330), und gemäß einer transversalen Ebene (M) ausgerichtet ist.

29. Fahrradspeichenrad (1) nach Anspruch 28, **dadurch gekennzeichnet, dass** die Speiche (60) einen abgeflachten Abschnitt (68) in dichter Nähe zu ihrem Kopf (64) enthält, wobei der abgeflachte Abschnitt (68) in die Ausnehmung (30, 31; 330) des wenigstens einen Sitzes (24, 25; 324) eingefügt ist.

30. Fahrradspeichenrad (1) nach Anspruch 27, bei dem der wenigstens eine Sitz (24, 25; 424; 524) der Speiche (5; 405; 505) durch den Körper der Nabe (5; 405; 505) in einer Längsrichtung (Y, Y') des Sitzes verläuft und weiterhin einen Hohlraum (26, 27; 426; 526, 527) enthält, der im Bezug auf die Ausnehmung (30, 31; 430; 530, 531) hinterschnitten ist, und in dem wenigstens einen Sitz (24, 25; 424; 524) eine Speiche (15, 60) aufgenommen ist, die einen abgeflachten zentralen Abschnitt (62) einer Größe, die geringer ist als die Breite (L) der Ausnehmung (30, 31; 430; 530; 531), und einen Verbindungshals (66) zwischen dem abgeflachten zentralen Abschnitt (62) und einem Kopf (64) enthält, wobei der Hals (66) einen kreisförmigen Querschnitt mit einem größeren Durchmesser als die Breite (L) der Ausnehmung (30, 31; 430; 530, 531) und einen abgeflachten Abschnitt (68) in dichter Nähe zu seinem Kopf (64) hat, wobei der abgeflachte Abschnitt (68) in die Ausnehmung (30, 31; 330) des wenigstens einen Sitzes (24, 25; 324) eingefügt ist.

31. Fahrradspeichenrad (1) nach Anspruch 30, **dadurch gekennzeichnet, dass** der abgeflachte zentrale Abschnitt (62) der Speiche (60) im wesentlichen gemäß einer transversalen Ebene (M) der Nabe (5; 405; 505) ausgerichtet ist, wobei die Ausrichtung durch die wechselseitige Ausrichtung (ALFA) zwischen dem abgeflachten zentralen Abschnitt (62) und dem abgeflachten Abschnitt (68) des Halses (66) impliziert ist.

32. Fahrradspeichenrad (1) nach einem der Ansprüche 28 bis 31, **dadurch gekennzeichnet, dass** der abgeflachte zentrale Abschnitt (62) der Speiche (60) in einem Abstand (H) von einem Kopf (64) der Speiche (60) angeordnet ist, der größer ist als die Länge (I) des Sitzes (24, 25; 324; 424; 524, 525) der Nabe (5; 305; 405; 505).

## Revendications

1. Moyeu (5 ; 105 ; 205 ; 305 ; 405 ; 505) destiné à une roue de bicyclette à rayons (1), comprenant au moins un support (24, 25 ; 124 ; 224 ; 324 ; 424 ; 524 ; 525) destiné à insérer et recevoir une partie d'extrémité d'un rayon (15, 60), ledit au moins un support (24, 25 ; 124 ; 224 ; 324 ; 424 ; 524 ; 525) comprenant une encoche (30, 31 ; 130 ; 230 ; 330 ; 430 ; 530 ; 531) formée pour l'insertion d'un rayon (15, 60) dans une direction différente d'une direction longitudinale du support(Y, Y'), et des surfaces (40, 41 ; 140 ; 141 ; 240, 241 ; 340, 341 ; 440, 441 ; 540, 541) destinées à arrêter le rayon (15, 60) à la fois dans les deux sens d'une direction (X, S1) d'un axe de rotation du moyeu (5 ; 105 ; 205 ; 305 ; 405 ; 505) et dans les deux sens d'une deuxième direction (S2) perpendiculaire à la fois à la direction axiale (X, S1) et à la direction longitudinale (Y, Y') du support.

2. Moyeu (5 ; 105 ; 205 ; 305 ; 405 ; 505) selon la revendication 1, **caractérisé en ce que** l'encoche (30, 31 ; 130 ; 230 ; 330 ; 430 ; 530 ; 531) est façonnée pour l'insertion d'un rayon (15, 60) dans une direction perpendiculaire à la direction longitudinale (Y, Y') du support.

3. Moyeu (5 ; 105 ; 205 ; 305) selon la revendication 1 ou 2, **caractérisé en ce qu'**un plan intermédiaire de l'encoche (30, 31 ; 130 ; 230 ; 330) est incliné par rapport à la direction axiale (X, S1) et à la deuxième direction (S2).

4. Moyeu (5 ; 105 ; 205 ; 305) selon la revendication 3, **caractérisé en ce que** le plan intermédiaire de l'encoche (30, 31 ; 130 ; 230 ; 330) est incliné d'un angle aigu (ALFA) par rapport à un plan transversal (M) du moyeu (5).

5. Moyeu (5 ; 105 ; 205 ; 305) selon la revendication 4, **caractérisé en ce que** ledit angle aigu (ALFA) se situe entre 10° et 80°.

6. Moyeu (5 ; 105 ; 205 ; 305) selon la revendication 5, **caractérisé en ce que** ledit angle aigu (ALFA) se situe entre 30° et 60°.

7. Moyeu (5 ; 105 ; 205 ; 305) selon la revendication 6, **caractérisé en ce que** ledit angle aigu (ALFA) se situe entre 40° et 50°.

8. Moyeu (105 ; 205) selon l'une quelconque des revendications 3 à 7, **caractérisé en ce que** ledit au moins un support (124 ; 224) est aveugle dans la direction longitudinale du support (Y), en étant plus large au niveau de l'extrémité aveugle (130a ; 138 ; 230a ; 238).

9. Moyeu (5 ; 305) selon l'une quelconque des revendications 3 à 7, **caractérisé en ce que** ledit au moins un support (24, 25 ; 324) traverse le corps du moyeu (5 ; 305) dans la direction longitudinale (Y, Y') du support.

10. Moyeu (5) selon la revendication 9, **caractérisé en ce que** ledit au moins un support (24, 25) comprend en outre une cavité (26, 27) découpée par rapport à l'encoche (30,31).

11. Moyeu (5 ; 405 ; 505) selon l'une quelconque des revendications 1 à 7, **caractérisé en ce que** ledit au moins un support (24, 25 ; 424 ; 524 ; 525) traverse le corps du moyeu (5 ; 405 ; 505) dans la direction longitudinale (Y, Y') du support et **en ce qu'**il comprend en outre une cavité (26, 27 ; 426 ; 526 ; 527) découpée par rapport à l'encoche (30, 31 ; 430 ; 530, 531).

12. Moyeu (5 ; 405 ; 505) selon la revendication 10 ou 11, **caractérisé en ce que** la cavité (26, 27 ; 426 ; 526, 527) est découpée par rapport à l'encoche (30, 31 ; 430 ; 530, 531) sur toute sa longueur (I).

13. Moyeu (5 ; 405 ; 505) selon l'une quelconque des revendications 10 à 12, **caractérisé en ce que** les surfaces découpées (35 ; 435 ; 535) du support (24, 25 ; 424 ; 524 ; 525) complètent au moins partiellement lesdites surfaces (40, 41 ; 440, 441 ; 540, 541) pour un arrêt dans la direction axiale (X, S1) et/ou dans la deuxième direction (S2).

14. Moyeu (5 ; 405 ; 265) selon l'une quelconque des revendications 10 à 13, **caractérisé en ce que** les surfaces découpées (35 ; 435 ; 535) du support (24, 25 ; 424 ; 524, 525) sont courbes.

15. Moyeu (5 ; 105 ; 205 ; 305 ; 405 ; 505) selon l'une quelconque des revendications précédentes, **caractérisé en ce que** le support (24, 25 ; 124 ; 224 ; 324 ; 424 ; 524, 525) comprend des parois s'étendant parallèlement à la direction longitudinale (Y, Y') du support, la direction longitudinale (Y, Y') du support étant inclinée (BÊTA, BÊTA') par rapport à un plan transversal (M) du moyeu (5 ; 105 ; 205 ; 305 ; 405 ; 505).

16. Moyeu (5 ; 105 ; 205 ; 305 ; 405, 505) selon la revendication 15, **caractérisé en ce que** ladite pente (BÊTA, BÊTA') coïncide avec un angle de carrossage de la roue.

17. Moyeu (5 ; 105 ; 205 ; 505) selon l'une quelconque des revendications précédentes, **caractérisé en ce qu'**il comprend au moins un élément de fixation de rayon (22, 23 ; 122 ; 222 ; 522 ; 523) dépassant radialement du moyeu (5 ; 105 ; 205 ; 505) près d'une extrémité axiale de celui-ci (7, 8 ; 507, 508), ledit au moins un support (24, 25 ; 124 ; 224 ; 524, 525) étant formé dans ledit au moins un élément de fixation de rayon (22, 23 ; 122 ; 222 ; 522 ; 523).

18. Moyeu (5 ; 105 ; 205 ; 505) selon la revendication 17, **caractérisé en ce que** dans chaque élément de fixation de rayon (22, 23; 122 ; 222 ; 522, 523), au moins deux supports (24, 25 ; 124 ; 224 ; 524, 525) sont formés.

19. Moyeu (5 ; 105 ; 205 ; 522, 523) selon la revendication 18, **caractérisé en que** lesdits au moins deux supports (24, 25 ; 124 ; 224 ; 524, 525) formés dans un même élément de fixation de rayon (22, 23 ; 122 ; 222 ; 522, 523) s'étendent conformément aux angles de carrossage (BÊTA, BÊTA') divergeant l'un de l'autre par rapport à un plan transversal (M) du moyeu (5 ; 105 ; 205 ; 505).

20. Moyeu (5 ; 505) selon l'une quelconque des revendications 17 à 19, **caractérisé en ce que** chaque élément de fixation de rayon (22, 23 ; 522, 523) est au moins partiellement incliné dans la direction radiale (R).

21. Moyeu (5 ; 505) selon la revendication 20, **caractérisé en ce que** chaque élément de fixation de rayon (22, 23 ; 522 ; 523) comprend des surfaces inclinées opposées (28), au niveau desquelles au moins une des extrémités (37, 38) d'une cavité (26, 27 ; 526, 527) du support (24, 25 ; 524, 525) est ouverte.

22. Moyeu (5 ; 505) selon la revendication 21, **caractérisé en ce que** chaque élément de fixation de rayon (22, 23 ; 522, 523) comprend des surfaces inclinées opposées (28) radialement à l'extérieur d'au moins une des extrémités (37, 38) de la cavité (26, 27 ; 526, 527) du support (24, 25 ; 524, 525).

23. Moyeu (5 ; 205 ; 505) selon l'une quelconque des revendications 17 à 22, **caractérisé en ce que** chaque élément de fixation de rayon (22, 23 ; 222 ; 522, 523) présente des entailles dans la direction axiale d'au moins une de ses extrémités opposées dans la direction axiale (X).

24. Moyeu (305 ; 405) selon l'une quelconque des revendications 1 à 16, **caractérisé en ce qu'**il comprend, au niveau d'au moins une de ses extrémités axiales (307, 308 ; 407, 408), une surface annulaire (309, 311 ; 409, 411), l'encoche (330 ; 430) dudit au moins un support (324; 424) s'étendant depuis ladite surface annulaire (309, 311 ; 409, 411).

25. Moyeu (5 ; 105 ; 505) selon l'une quelconque des revendications précédentes, **caractérisé en ce que** la direction longitudinale (Y, Y') dudit au moins un support (24, 25 ; 124 ; 524, 525) est sensiblement tangentielle.

26. Moyeu (205 ; 305 ; 405) selon l'une quelconque des revendications 1 à 25, **caractérisé en ce que** la direction longitudinale (Y, Y') dudit au moins un support (204 ; 324 ; 424) est sensiblement radiale.

27. Roue de bicyclette à rayons (1), comprenant un moyeu (5 ; 105 ; 205 ; 305 ; 405 ; 505) selon l'une quelconque des revendications 1 à 26.

28. Roue de bicyclette à rayons (1) selon la revendication 27, dans laquelle le au moins un support (24, 25 ; 324) du moyeu (5 ; 305) traverse le corps du moyeu (5 ; 305) selon une direction longitudinale (Y, Y'), un plan médian de l'encoche (30, 31 ; 330) du au moins un support (24, 25 ; 324) est incliné d'un angle aigu (ALFA) par rapport à un plan transversal (M) du moyeu et dans le au moins un support (24, 25 ; 324) un rayon (15, 60) est logé, comprenant une partie centrale aplatie (62) d'une taille inférieure à la largeur (L) de l'encoche (30, 31 ; 330) et orientée selon un plan transversal (M).

29. Roue de bicyclette à rayons (1) selon la revendication 28, **caractérisée** à ce que le rayon (60) comprend une partie aplatie (68) à proximité étroite d'une tête (64) de celui-ci, la partie aplatie (68) étant insérée dans l'encoche (30, 31 ; 330) du au moins un support (24, 25 ; 324).

30. Roue de bicyclette à rayons (1) selon la revendication 27, dans laquelle le au moins un support (24, 25 ; 424 ; 524) du moyeu (5 ; 405 ; 505) traverse le corps du moyeu (5 ; 405 ; 505) dans une direction longitudinale (Y, Y') du support et comprend en outre une cavité (26, 27 ; 426 ; 526, 527) découpée par rapport à l'encoche (30, 31 ; 430 ; 530, 531) et dans le au moins un support (24, 25 ; 424 ; 524) un rayon (15, 60) est logé, comprenant une partie centrale aplatie (62) d'une taille inférieure à la largeur (L) de l'encoche (30, 31 ; 430, 530, 531) et une bague de raccord (66) entre la partie centrale aplatie (62) et une tête (64), la bague (66) présentant une section circulaire ayant un diamètre plus important que la largeur (L) de l'encoche (30, 31 ; 430 ; 530, 531) et une partie aplatie (68) à proximité étroite d'une tête (64) de celui-ci, la partie aplatie (68) étant insérée dans l'encoche (30, 31 ; 330) du au moins un support (24, 25 ; 324).

31. Roue de bicyclette à rayons (1) selon la revendication 30, **caractérisée en ce que** la partie centrale aplatie (62) du rayon (60) est orientée sensiblement selon un plan transversal (M) du moyeu (5 ; 405 ; 505), l'orientation étant impliquée par l'orientation mutuelle (ALFA) entre la partie centrale aplatie (62) et la partie aplatie (68) de la bague (66).

32. Roue de bicyclette à rayons selon l'une quelconque de revendications 28 à 31, **caractérisée en ce que** la partie centrale aplatie (62) du rayon (60) se situe à une distance (H) d'une tête (64) du rayon (60) supérieure à la longueur (I) du support (24, 25 ; 324 ; 424 ; 524, 525) du moyeu (5 ; 305 ; 405 ; 505).
